# EUROPÄISCHE PATENTSCHRIFT

(11) **EP 3 338 883 B1**
(45) Veröffentlichungstag und Bekanntmachung des Hinweises auf die Patenterteilung: **03.06.2020**
(21) Anmeldenummer: 17199833.9
(22) Anmeldetag: 03.11.2017
(51) Int. Cl.: B01J 8/04, B01J 19/24, B01J 8/00, B01J 8/02, C01B 21/20, C01B 21/28

(54) **VORRICHTUNG UND VERFAHREN ZUM EINTRAGEN VON GAS IN EINE MEHRZAHL VON PROZESSFLUIDEN**
APPARATUS AND PROCESS FOR TRANSFERRING GAS INTO A PLURALITY OF PROCESS FLUIDS
DISPOSITIF ET PROCÉDÉ D'INTRODUCTION DE GAZ DANS UNE MULTITUDE DE FLUIDES DE TRAITEMENT

(30) Priorität: 22.12.2016 DE 102016015322
(43) Veröffentlichungstag der Anmeldung: 27.06.2018
(73) Patentinhaber: Messer Group GmbH, 65812 Bad Soden (DE)
(72) Erfinder: Bachleitner, Walter, 4600 Wels (AT)
(74) Vertreter: Münzel, Joachim R.

(56) Entgegenhaltungen:
- EP-A1- 3 165 505
- CA-A1- 2 828 242
- US-B2- 8 663 596

## Beschreibung

Die Erfindung betrifft eine Vorrichtung zum Eintragen von Gas in eine Mehrzahl von Prozessfluiden, mit einem Reaktor und einer mit einer Gasversorgung strömungsverbundenen und in den Reaktor einmündenden Gaszuleitung, und mit einer Eintragseinrichtung zum Eintragen des Gases aus der Gaszuleitung in ein im Reaktor befindliches Prozessfluid. Die Erfindung betrifft des Weiteren ein entsprechendes Verfahren.

Zum Eintragen von Gas in Flüssigkeiten kommen beispielsweise Injektoren zum Einsatz, bei denen Gas an Düsen mit hoher Geschwindigkeit in die Flüssigkeit eingetragen wird. Durch den Eintrag des Gases in der Flüssigkeit wird eine turbulente Strömung erzeugt, die für eine gründliche Durchmischung der erzeugten Gasblasen mit der umgebenden Flüssigkeit sorgt.

Um eine besonders große Reaktionsoberfläche zwischen Gas und Flüssigkeit zu schaffen, kommen Einperlsysteme (auch "Sparger" genannt) zum Einsatz. Beispielsweise umfasst ein derartiges Einperlsystem einen Reaktor in Form eines langgestreckten oder gekrümmten Rohres, das von der Flüssigkeit durchlaufen wird. In dieses Rohr mündet eine Gaszuleitung ein, die an ihrem in das Innere des Rohrs hineinragendem Ende mit einem Gasverteiler aus einem porösen Material, beispielsweise Sintermetall, ausgerüstet ist. Das unter Druck zugeführte Gas durchströmt das Sintermetall und tritt an dessen Oberfläche an kleinen Öffnungen in Form einer Vielzahl kleinvolumiger Gasbläschen aus, die sich fein in der Flüssigkeit verteilen. Ein derartiges Einperlsystem wird beispielsweise in der US 4 861 352 A1 beschrieben.

Die vorgenannten Eintragssysteme haben sich in einer Vielzahl unterschiedlicher Anwendungen bewährt. Sie sind jedoch für Aufgabenstellungen, bei denen das Eintragen des gleichen Gases in verschiedene Prozessfluide oder in ein nacheinander verschiedene Abschnitte eines Prozesses durchlaufendes Prozessmedium erfolgen soll, nur bedingt geeignet, da dazu recht umständliche und aufwändige apparative Maßnahmen erforderlich sind.

Aufgabe der vorliegenden Erfindung ist daher, eine Vorrichtung sowie ein Verfahren zum Eintragen eines Gases in eine Mehrzahl von Prozessfluiden zu schaffen, das einfach im Aufbau ist und einen zuverlässigen Gaseintrag in alle beteiligten Prozessfluide ermöglicht.

Gelöst ist diese Aufgabe durch einer Vorrichtung mit den Merkmalen des Patentanspruchs 1 sowie durch ein Verfahren mit den Merkmalen des Patentanspruchs 9. Vorteilhafte Ausgestaltungen der Erfindung sind in den Unteransprüchen angegeben.

Als "Mehrzahl von Prozessfluiden" wird hier eine Mehrzahl flüssiger Substanzen verstanden, in die jeweils das gleiche Gas eingetragen werden soll. Beispielsweise handelt es sich dabei um Substanzen, die aus unterschiedlichen Prozessen stammen und jeweils mit dem gleichen Gas behandelt werden sollen. Im Sinne der vorliegenden Erfindung sind unter einer "Mehrzahl von Prozessfluiden" jedoch insbesondere auch flüssige Zwischenprodukte aus einem in mehreren Schritten ablaufenden Prozess, bei dem die Zwischenprodukte jeweils mit dem gleichen Gas behandelt werden. Beispielweise CA 2 828 242 A1 offenbart eine Vorrichtung zur Entgasung von Schwefel, die in mehrere Kammern getrennt ist. Jedes Kompartiment ist mit einer Eingang und Ausgang Leitung ausgerüstet. Zur Eintragung des Gases in jedes Kompartiment ist die Vorrichtung mit einer Gasquelle verbunden. Das Gas wird in jeder Kammer durch Lochbleche weitergeleitet. Es ist aus der EP 2 953 894 A1 ein Prozess zur Herstellung von Salpetersäure bekannt, bei dem ein Gas (Sauerstoff) an mehreren Schritten des Prozesses in ein die Prozessschritte nacheinander durchlaufendes Prozessmedium eingetragen wird. Beim Prozessmedium handelt es sich dabei um eine wässerige Lösung, die NOₓ und/oder HNO₃ in jeweils unterschiedlichen Konzentrationen enthält. Auch derartige, jeweils mit dem Gas zu behandelnde Zwischenprodukte sollen hier als "Prozessfluide" verstanden werden.

Eine Vorrichtung der eingangs genannten Art und Zweckbestimmung ist erfindungsgemäß also dadurch gekennzeichnet, dass der Reaktor in mehrere strömungstechnisch getrennte, jeweils mit einer Zu- und einer Ableitung für jeweils ein Prozessfluid ausgerüstete Reaktorkammern unterteilt ist, und die Eintragseinrichtung eine Mehrzahl von jeweils einer Reaktorkammer zugeordneten und innerhalb der jeweiligen Reaktorkammer angeordneten Eintragsabschnitten umfasst, die aus einem gasdurchlässigen, jedoch im Wesentlichen flüssigkeitsundurchlässigen Material gefertigt sind.

Jede der Reaktorkammern wird über separate Zuleitungen unabhängig von den anderen Reaktorkammern mit einem Prozessfluid beschickt. Über separate Ableitungen werden die Prozessfluide wiederum unabhängig voneinander abgezogen und ihren jeweiligen Prozessen oder Prozessabschnitten zugeführt; die Prozessfluide durchlaufen die Reaktorkammern also kontinuierlich und werden dabei mit dem Gas beaufschlagt. Zur Einleitung des Gases strömt das Gas bei der erfindungsgemäßen Vorrichtung aus der Gaszuleitung über die Eintragsabschnitte gleichzeitig in die strömungstechnisch voneinander getrennten Reaktorkammern ein. Die Eintragsabschnitte sind dabei derart ausgebildet, dass das in einer Reaktorkammer vorliegende Prozessfluid nicht in die Gaszuleitung einströmen und über die Gaszuleitung in andere Reaktorkammern eindringen kann. Dies wird erfindungsgemäß durch Verwendung eines gasdurchlässigen, jedoch flüssigkeitsundurchlässigen Materials für den Eintragsabschnitt gewährleistet. Als derartiges Material kommt beispielsweise Sintermetall oder ein vergleichbar feinporig poröses Material in Betracht, das die Eigenschaft besitzt, als flüssig-gasförmig-Filter zu wirken. Darüber hinaus hat sich gezeigt, dass ein aus einem Sintermetallkörper gefertigter Eintragsabschnitt das Eintragen eines kalten Gases in ein flüssiges Medium selbst dann ermöglicht, wenn das Gas bei einer Temperatur eingetragen wird, die gleich oder sogar niedriger als die Gefriertemperatur des flüssigen Mediums ist, ohne dass es dabei in nennenswertem Umfang zur Bildung von Eis auf der Oberfläche des Sintermetallkörpers kommt.

Der Eintragsabschnitt kann ein aus einem porösen Material gefertigter Abschnitt der durch die jeweilige Reaktorkammer hindurchgeführten Gaszuleitung oder eines Astes der Gaszuleitung selbst sein, oder es handelt sich dabei um eine an die Gaszuleitung angeschlossene und innerhalb einer jeden Reaktorkammer angeordnete Einheit zum Einperlen des Gases, etwa in Form einer Kerze oder eines Tellers. Wesentlich ist, dass das Eintragen des Gases in ein erstes Prozessfluid weder den Eintrag des Gases in ein zweites Prozessfluid beeinträchtigt noch zu einer Durchmischung der beiden Prozessfluide führt.

Um eine möglichst große Reaktionsoberfläche zwischen dem in einer Reaktorkammer vorliegenden Prozessfluid und dem eingetragenen Gas zu schaffen und/oder eine möglichst lange Kontaktzeit zwischen Gas und Flüssigkeit zu gewährleisten, bestehen verschiedene Möglichkeiten, die jeweils alternativ oder ergänzend zueinander zum Einsatz gebracht werden können:
Beispielsweise steht das Prozessfluid innerhalb der Reaktorkammer bis zu einer gewissen Pegelhöhe als Flüssigkeitssäule, in die das Gas in Form feiner Gasbläschen eingeperlt wird. Hierzu eignen sich insbesondere Eintragsabschnitte, die aus kleinporigen Sintermetall gefertigt sind und im Betrieb der Vorrichtung vom jeweiligen Prozessfluid umspült werden.

Sofern im Betrieb der Vorrichtung innerhalb einer Reaktorkammer ein vom eingeleiteten Gas gefüllter Gasraum vorliegt, etwa oberhalb einer Flüssigkeitssäule oder anstelle einer solchen, so ist es zweckmäßig, dass die Zuführung für das Prozessfluid wenigstens dieser Reaktorkammer mit einer Sprühdüse ausgerüstet ist. Die Sprühdüse, bei der es sich beispielsweise um eine Ringdüse handelt, sorgt für eine feine Verteilung der Flüssigkeit im Gasraum. Um die Reaktionsoberfläche zu vergrößern, erweist es sich zudem als vorteilhaft, eine oder mehrere der Reaktorkammern mit einer Packung auszurüsten. Bevorzugt besteht die Packung dabei aus Raschig-Ringen oder anderen Füllkörpern.

Eine besonders bevorzugte Ausgestaltung der Erfindung sieht vor, dass der Reaktor zylinderförmig, mit in Längsrichtung aufeinanderfolgenden Reaktorkammern ausgebildet ist, durch die sich die Gaszuleitung, beispielsweise zentral, hindurcherstreckt. Die Gaszuleitung ist also durch alle Reaktorkammern hindurchgeführt und in jeder Kammer mit einer Eintragseinrichtung ausgerüstet. Beispielsweise weist der Reaktor mehrere den Reaktor in strömungstechnisch voneinander getrennte Reaktorkammern unterteilende Böden auf, durch die die Gaszuleitung derart fluiddicht geführt ist, dass zwischen den Reaktorkammern kein Austausch von Prozessfluiden möglich ist. Der Reaktor kann beispielsweise aufrecht stehend angeordnet sein, mit einer bevorzugt senkrecht verlaufenden, den Reaktor und seine Reaktorkammern zentral durchlaufenden Gaszuleitung.

Als Eintragseinrichtung weist die Gaszuleitung in jeder der Reaktorkammern einen Eintragsabschnitt zum Eintragen des Gases auf, bei dem es sich bevorzugt um einen feinporig porösen, beispielsweise aus Sintermetall gefertigten Abschnitt der Wand der Gaszuleitung selbst handelt. Eine besonders bevorzugte Eintragseinrichtung besteht in einer Sintermetallkerze, die sich durch alle oder mehrere der Reaktorkammern hindurcherstreckt, wobei im Bereich der die Reaktorkammern trennenden Böden oder Wänden jeweils eine Dichtung vorgesehen ist, die eine Strömung von Prozessfluid zu benachbarten Reaktorkammer unterbindet. In diesem Fall werden die Eintragsabschnitte bevorzugt durch die poröse Wand der Sintermetallkerze gebildet.

Zweckmäßigerweise ist die Gaszuleitung stromauf zur Einmündung in den Reaktor und/oder sind die Zuführungen und/oder Ableitungen für das Prozessfluid wenigstens eines Teils der Reaktorkammern mit regelbaren Ventilen ausgerüstet, die mit einer Steuereinheit datenverbunden sind. Auf diese Weise können die Zuströme nach einem vorgegebenen Programm oder in Abhängigkeit von vorgegebenen Parametern geregelt werden; beispielsweise kann der Zustrom des Gases in Abhängigkeit von der Konzentration eines eingelösten Teils des Gases im Prozessfluid, von der Konzentration eines bestimmten Reaktionsprodukts oder von Druck und/oder Temperatur des zuzuführenden Gases abhängig gemacht werden. In dem oben erwähnten Beispiel des Eintrags von Sauerstoff in einen Prozess zur Herstellung von Salpetersäure handelt es sich bei dem Regelparameter vorzugsweise um die Konzentration von gelösten Stickoxiden oder von Salpetersäure in dem jeweiligen Zwischenprodukt, in das der Sauerstoff eingetragen wird.

Die erfindungsgemäße Vorrichtung wird vorteilhaft bei Anlagen eingesetzt, in denen die Gaszuleitung mit einer Quelle für flüssigen oder kalten gasförmigen Sauerstoff oder eines kalten sauerstoffreichen Gases strömungsverbunden ist. Als "sauerstoffreiches Gas" wird hier allgemein ein Gas mit einem Sauerstoffgehalt von mehr als 21 Vol.-% verstanden, bevorzugt ein Gas mit einem Sauerstoffgehalt von über 80 Vol.-%.

Ein bevorzugter Einsatz der erfindungsgemäßen Vorrichtung liegt dabei in der Zuführung von Sauerstoff in verschiedene Abschnitte eines Prozesses zur Herstellung von Salpetersäure. Dazu sind die Zu- und Ableitungen der Reaktorkammern jeweils mit unterschiedlichen Anlagenteilen einer Anlage zur Produktion von Salpetersäure strömungsverbunden; beispielsweise ist die Zuleitung einer ersten Reaktorkammer mit der Ausleitung aus dem Sumpf eines Absorptionsturms strömungsverbunden, und eine andere Reaktorkammer ist in einer Zuleitung für eine Bleichkolonne integriert. Entsprechende, für die Zuführung von Sauerstoff geeignete Prozessabschnitte werden beispielsweise in der EP2 953 894 A1 oder der EP 1 013 604 B1 genannt, auf die hier ausdrücklich Bezug genommen wird. Dabei können mehrere oder alle diese Prozessabschnitte mittels einer einzigen erfindungsgemäßen Vorrichtung mit Sauerstoff versorgt werden.

Jedoch ist die Erfindung nicht auf diese Einsatzmöglichkeit beschränkt, sondern sie kann auch in anderen Fällen eingesetzt werden, in denen Sauerstoff oder ein sauerstoffreiches Gas, insbesondere kalter gasförmiger Sauerstoff, in eine Mehrzahl von Prozessfluiden, beispielsweise zu deren Oxidation oder Sauerstoffanreicherung, eingetragen werden soll.

Die Aufgabe der Erfindung wird auch durch ein Verfahren zum Eintragen eines Gases in eine Mehrzahl von Prozessfluiden mit den Merkmalen des Patentanspruchs 9 gelöst. Ein solches Verfahren, bei dem ein Gas über eine mit einer Eintragseinrichtung ausgerüstete Gaszuleitung in einen Reaktor eingetragen wird, ist erfindungsgemäß dadurch gekennzeichnet, dass das Gas aus der Gaszuleitung über aus einem gasdurchlässigen, jedoch flüssigkeitsundurchlässigen Material bestehende Eintragsabschnitte gleichzeitig in eine Mehrzahl von Prozessfluiden eingetragen wird, die jeweils strömungstechnisch voneinander getrennte Reaktorkammern des Reaktors durchlaufen.

Als Eintragsabschnitte aus einem gasdurchlässiges, jedoch im Wesentlichen flüssigkeitsundurchlässiges Material eignen sich insbesondere mit der Gaszuleitung strömungsverbundene Sintermetallkörper, die innerhalb der einzelnen Reaktorabschnitte angeordnet sind.

Eine besonders vorteilhafte Ausgestaltung der Erfindung sieht vor, dass es sich bei den Prozessfluiden um Zwischenprodukte eines mehrere Stufen durchlaufenden Prozesses zur Verarbeitung eines fluiden Prozessmediums handelt. Das Prozessmedium durchläuft in diesem Fall also während des Verarbeitungsprozesses mehrere Verfahrensschritte, in denen die entstehenden Zwischenprodukte jeweils mit dem gleichen Gas behandelt werden sollen. In jedem oder einigen dieser Verfahrensschritte wird dazu das jeweilige Zwischenprodukt einer der Reaktionskammern einer erfindungsgemäßen Vorrichtung zugeführt und nach der Behandlung mit dem eingeleiteten Gas in den Verarbeitungsprozess zurückgeführt. So kann eine erfindungsgemäße Vorrichtung gleichzeitig verschiedene die Reaktorkammern durchlaufende Zwischenprodukte kontinuierlich mit dem gleichen Gas beaufschlagen, ohne dass es zu einer Vermischung der Zwischenprodukte kommt.

Beispiele für mögliche Einsatzgebiete der erfindungsgemäßen Vorrichtung bzw. des erfindungsgemäßen Verfahrens abseits der Herstellung von Salpetersäure sind die Herstellung von Schwefelsäure, welche analog zur Salpetersäure durch Absorption von Schwefeldioxid (SO₂) und Schwefeltrioxid (SO₃) in Wasser - z.B. im sogenannten Doppelkontaktverfahren - gebildet wird. Im Rahmen der Erfindung ist insbesondere die gezielte Einbringung von Sauerstoff zur Oxidation der aus SO₂ und Wasser gebildeten schwefeligen Säure (H₂SO₃) realisierbar.

Zudem existieren eine Reihe von Oxidationsreaktionen in der industriellen organischen Chemie, für welche die erfindungsgemäße Vorrichtung bzw. das erfindungsgemäße Verfahren eingesetzt werden kann. Einige Beispiele für Gas/flüssig-Oxidationen, bei welchen derzeit bereits angereicherter Sauerstoff eingesetzt wird seien hier wie folgt genannt:
- Die Herstellung von Essigsäure aus Acetaldehyd und Sauerstoff,
- Die Herstellung von Terephthalsäure, Dimethylterephthalat und dessen Derivate,
- Die Herstellung von Phenol und Aceton über Cumolhydroperoxyd als hochreaktives Zwischenprodukt; dabei wird Cumol mit sauerstoffangereicherter Luft oder reinem Sauerstoff in Blasensäulenreaktoren o.ä. zu Cumolhydroperoxid umgesetzt, welches anschließend in Phenol und Aceton umgewandelt wird,
- Die Herstellung von Vinylacetat, welche durch Umsetzung von Ethylen, Essigsäure und O₂ erfolgt,
- Die Herstellung von Phtalsäureoxid und dessen Derivate durch Oxidaton von 2,6 Dimethylbenzol oder Naphthen mit reinem Sauerstoff erfolgt.
Bei den oben genannten Reaktionen ist der kontrollierte Einsatz von kaltem Sauerstoff mittels der Erfindung auch von großem Interesse, um die Prozesse sicherheitstechnisch besser steuern zu können.

Neben den oben genannten Einsatzgebieten im Bereich Oxidationsreaktionen ergeben sich auch Anwendungsmöglichkeiten für andere Gas-Flüssig Reaktionen, wie zum Beispiel Hydrierung von Fetten, Ölen und anderen ungesättigten organischen Verbindungen. Hierbei können in einem Reaktor einer erfindungsgemäßen Vorrichtung verschiedene derartige Verbindungen zur gleichen Zeit hydriert werden. Damit ergeben sich erhebliche Kosteneinsparungen, insbesondere gegenüber einem nacheinander erfolgenden Betrieb verschiedener Hydrierungsreaktionen im gleichen Reaktor, bei dem zwischen den einzelnen Chargen aufwändige Reinigungsarbeiten durchzuführen sind. Auch hier könnten sich der Eintrag von Wasserstoff bei möglichst niedrigen Temperaturen als förderlich herausstellen.

Auch Synthesen mit Ammoniak (NH₃), CO₂ und anderen reaktiven Gasen wie Hydrazin (H₂N-NH₂), CO, NO, NO2, SO₂, SO₃, F₂, Cl₂, O₃ können mittels einer erfindungsgemäßen Vorrichtung bzw. einem erfindungsgemäßem Verfahren umgesetzt werden.

Das erfindungsgemäße Verfahren und die erfindungsgemäße Vorrichtung eignet sich insbesondere für die Zuführung eines kalten Gases, insbesondere eines Gases, dessen Temperatur bei der Einleitung in eines oder mehrere der Prozessfluide höchstens 0-5K höher, gleich oder niedriger ist als die Gefriertemperatur des jeweiligen Prozessfluids oder der Prozessfluide ist. Insbesondere die Verwendung von aus Sintermetall oder vergleichbar feinporigen Materialien gefertigten Eintragsabschnitten ermöglicht die Zuführung eines Gases, dessen Temperatur bei der Zuführung zum Prozessfluid niedriger ist als die Gefriertemperatur dieses Prozessfluids.

Beispielsweise bei der Einspeisung von Sauerstoff in ein Verfahren zum Herstellen von Salpetersäure hat sich herausgestellt, dass eine besonders tiefe Temperatur des eingetragenen Sauerstoffs von Vorteil ist. Insbesondere bei dieser Anwendung ist es daher vorteilhaft, wenn der Sauerstoff gasförmig, jedoch bei Temperaturen bei oder unterhalb der Gefriertemperatur der Flüssigkeit vorliegt, in die er eingetragen wird. Die Gefriertemperatur von Schwachsäure aus einem Absorptionsturm einer Anlage zur Produktion von Salpetersäure liegt bei etwa -20°C bis -40°C. Das erfindungsgemäße Verfahren und die erfindungsgemäße Vorrichtung mit einem aus Sintermetall gefertigten Eintragsabschnitt ermöglicht eine Zuführung von Sauerstoff mit einer Temperatur, die bei oder sogar unterhalb dieser Gefriertemperatur liegt, also beispielsweise von -25°C bis -60°C. Die Zuführung des Sauerstoffs über einen Sintermetallkörper verhindert oder verzögert dabei das Einfrieren der Flüssigkeit an der Oberfläche des Sintermetallkörpers.

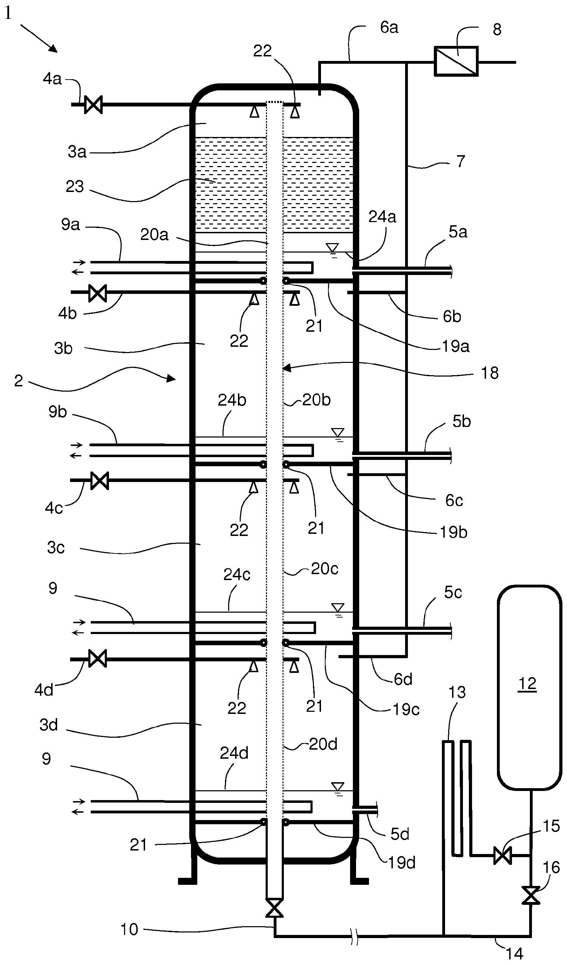

Anhand der Zeichnung soll ein Ausführungsbeispiel der Erfindung näher erläutert werden. Die einzige Zeichnung (Fig. 1) zeigt schematisch eine erfindungsgemäße Vorrichtung im Längsschnitt.

Die in Fig. 1 gezeigte Vorrichtung 1 umfasst einen im wesentlichen zylindrisch aufgebauten, aufrecht stehenden Reaktor 2 mit vorzugsweise thermisch isolierten Wänden, der in mehrere, im gezeigten Ausführungsbeispiel in vier, strömungstechnisch voneinander getrennte Reaktorkammern 3a, 3b, 3c, 3d unterteilt ist. In jede der Reaktorkammern 3a, 3b, 3c, 3d mündet jeweils eine Zuleitung 4a, 4b, 4c, 4d und eine Ausleitung 5a, 5b, 5c, 5d für ein Prozessfluid ein. Ferner ist jede der Reaktorkammern 3a, 3b, 3c, 3d mit einer Abgasleitung 6a, 6b, 6c, 6d ausgerüstet, die im gezeigten Ausführungsbeispiel in eine gemeinsame Sammelleitung 7 einmünden, in der, stromab zu den Einmündungen der Abgasleitungen 6a, 6b, 6c, 6d, ein Tropfenabscheider 8 angeordnet ist.

Anstatt, wie gezeigt, in einer gemeinsamen Sammelleitung einzumünden, können die Abgasleitungen 6a, 6b, 6c, 6d selbstverständlich auch als voneinander separierte Leitungen ausgeführt sein, die zu jeweils unterschiedlichen Orten der Weiterverwertung oder Entsorgung des jeweils anfallenden Abgases führen.

Im Bodenbereich einer jeden Reaktorkammer 3a, 3b, 3c, 3d ist ein Wärmetauscher 9a, 9b, 9c, 9d vorgesehen, der mit einem Wärmeträgerfluid beschickt werden kann, das innerhalb der jeweiligen Reaktorkammer 3a, 3b, 3c, 3d mit dem dort befindlichen Prozessfluid in indirekten Wärmetausch tritt. Bei dem Wärmeträgerfluid handelt es sich beispielsweise um Kühlwasser oder um ein anderes Medium mit hoher Wärmekapazität.

Zum Einleiten eines Gases in die in den Reaktorkammern 3a, 3b, 3c, 3d vorliegenden Prozessfluide mündet eine Gaszuleitung 10 in den unteren Bereich des Reaktors 2 ein, die mit einer Gasquelle, beispielsweise ein Tank, eine Gasleitung oder ein Druckbehälter strömungsverbunden ist. Im hier gezeigten Ausführungsbeispiel handelt es sich bei der Gasquelle um einen Tank 12, in dem ein Gas, beispielsweise Sauerstoff, im flüssigen Zustand bevorratet wird. Das flüssige Gas aus dem Tank 12 wird in einem Verdampfer 13 verdampft und anschließend in die Gaszuleitung 10 eingeleitet. Zur Einstellung einer vorgegebenen Temperatur kann dem im Verdampfer 13 verdampften Gas eine vorgegebene Menge an flüssigem Gas beigemischt werden, das über eine Bypassleitung 14 am Verdampfer 13 vorbei in die Gaszuleitung 10 eingespeist wird. Dazu kann der Zufluss zum Verdampfer 13 und/oder der Bypassleitung 14 mit regelbaren Ventilen 15, 16, die mit einer hier nicht gezeigten Steuereinheit verbunden sind, eingestellt werden.

Die Gaszuleitung 10 mündet innerhalb des Reaktors in einer Gaseintragseinrichtung 18 aus, mittels der das Gas in alle Prozessfluide in den Reaktorkammern 3a, 3b, 3c, 3d eingetragen wird. Bei der Gaseintragseinrichtung 18 handelt es sich um eine mittig durch den Reaktor 2 geführte Rohrleitung, die durch Durchführungen in den Reaktorkammern 3a, 3b, 3c, 3d begrenzenden Böden 19a, 19b, 19c, 19d geführt ist und im Bereich der Reaktorkammern 3a, 3b, 3c, 3d mit Gaszuführungen zum Eintragen des Gases ausgerüstet ist. Im hier gezeigten Ausführungsbeispiel handelt es sich bei der Gaseintragseinrichtung 18 um eine Sintermetallkerze, deren poröse Wand innerhalb der Reaktorkammern 3a, 3b, 3c, 3d Eintragsabschnitte 20a, 20b, 20c, 20d zum Eintragen des Gases bilden. Die feinen Poren des Sintermetalls ermöglichen es, dass Gas aus der Gaszuleitung 10 in die Reaktorkammern 3a, 3b, 3c, 3d, umgekehrt aber kein Prozessfluid aus den Reaktorkammern 3a, 3b, 3c, 3d in die Sintermetallkerze eindringen kann. Die Sintermetallkerze mündet in der obersten Reaktorkammer 3a aus. Um zu verhindern, dass im Bereich der Durchführungen, durch die die Sintermetallkerze durch die Böden 19a, 19b, 19c, 19d hindurch geführt ist, Prozessfluid aus einer Reaktorkammer 3a, 3b, 3c, 3d in eine andere einströmt, ist die Sintermetallkerze dort jeweils mit geeigneten Dichtmitteln 21 versehen. Anstelle einer Kerze aus Sintermetall kann im Übrigen auch ein anderes poröses Material vorgesehen sein, das vergleichbare Eigenschaften bezüglich einer Gas-Flüssig-Trennung aufweist.

Um eine feine Verteilung des jeweils zugeführten Prozessfluids in der jeweiligen Reaktorkammer 3a, 3b, 3c, 3d zu bewirken, münden die Zuleitungen 4a, 4b, 4c, 4d vorteilhaft in Sprühdüsen 22 aus. Im hier gezeigten Ausführungsbeispiel handelt es sich dabei jeweils um Ringdüsen, bei denen eine ringförmige Düsenanordnung mit einer Mehrzahl an Düsenöffnungen um die Sintermetallkerze der Gaseintragseinrichtung 18 herum angeordnet ist. Zudem kann das Innere einer oder mehrerer der Reaktorkammern 3a, 3b, 3c, 3d mit einer Packung 23 gefüllt sein, wie in Fig. 1 in der Reaktorkammer 3a angedeutet. Bei der Packung 23 handelt es sich beispielsweise um eine Packung aus Raschig-Ringen oder sonstigen Füllkörpern.

Der Betrieb der Vorrichtung 1 wird im Folgenden anhand des Beispiels einer multiplen Sauerstoffversorgung einer Anlage zur Salpetersäureproduktion erläutert.

Eine Anlage zur Herstellung von Salpetersäure, wie sie beispielsweise in der EP 2 953 894 A1 beschrieben wird, weist verschiedene Anlagenkomponenten auf, wie beispielsweise eine oder mehrere Absorptionskolonnen, einen Kondensator oder eine Bleichkolonne, in denen jeweils mit Stickoxiden und/oder Salpetersäure beladene wässerige Flüssigkeiten anfallen, die im folgenden "Schwachsäuren" genannt werden.

Durch Zugabe von Sauerstoff, insbesondere von kaltem Sauerstoff, in die Schwachsäuren kann die Effizienz der Salpetersäureproduktion beträchtlich gesteigert werden, jedoch dürfen sich die Schwachsäuren aus den verschiedenen Prozessstufen nicht miteinander vermischen.

Gemäß der vorliegenden Erfindung werden die Schwachsäuren aus den unterschiedlichen Prozessstufen der Salpetersäureherstellung jeweils in die Reaktorkammern 3a, 3b, 3c, 3d eingeleitet. Beispielsweise wird die am Kondensator anfallende Schwachsäure in die Reaktorkammer 3a eingeleitet, Schwachsäure aus dem Sumpf einer ersten Absorptionskolonne in die Reaktorkammer 3b, Schwachsäure aus dem Sumpf einer zweiten Absorptionskolonne in die Reaktorkammer 3c und Schwachsäure aus einer Zuführung zur Bleichkolonne in die Reaktorkammer 3d. Über die jeweiligen Zuleitungen 4a, 4b, 4c, 4d werden die Schwachsäuren in die Reaktorkammern 3a, 3b, 3c, 3d eingesprüht, wobei jeweils eine Flüssigkeitssäule bis zur Höhe eines Flüssigkeitspegels 24a, 24b ,24c, 24d in der Reaktorkammer 3a, 3b, 3c ,3d aufrechterhalten wird.

Über die Sintermetallkerze der Eintragseinrichtung 18 werden alle Reaktorkammern 3a, 3b, 3c ,4d mit Sauerstoffgas aus der Gaszuleitung beschickt. Die feinporige Struktur des Sintermetallkörpers ermöglicht das Eintragen des Sauerstoffs mit einer Temperatur, die der Gefriertemperatur der jeweiligen Schwachsäure (meist zwischen -20°C und -40°C) entspricht oder sogar noch darunter liegt, beispielsweise 5 K bis 10 K unter dieser Gefriertemperatur, ohne dass die Schwachsäure an der Oberfläche der Sintermetallkerze gefriert und dadurch den Sauerstoffeintrag unterbricht. Der eingeleitete Sauerstoff reagiert wenigstens teilweise mit in den Schwachsäuren gelösten Stickoxiden und salpetriger Säure (HNO₂) unter Bildung von Salpetersäure (HNO₃). Dabei wird die Reaktion durch den feinperligen Eintrag des Sauerstoffs in die Flüssigkeitssäule über das Sintermetall ebenso begünstigt wie durch das Versprühen der Schwachsäure an den Sprühdüsen 22. Die mit Sauerstoff behandelten Säuren, auch "gebleichte Säuren" genannt, werden anschließend über die Ableitungen 5a, 5b, 5c, 5d strömungstechnisch getrennt voneinander an ihre jeweiligen Bestimmungsorte zurückgeführt. Das sich in den Kopfräumen der Reaktorkammern 3a, 3b, 3c, 3d ansammelnde sauerstoffreiche Gas wird über die Abgasleitungen 6a, 6b, 6c, 6d und die Sammelleitung 7 abgeführt, im Tropfenabscheider 8 von flüssigen Anteilen befreit und einer anschließenden Weiterverwertung zugeführt.

Die Temperatur des zugeführten Sauerstoffs kann über die Einstellung des Verhältnisses der über den Verdampfer 13 und die Bypassleitung 14 geführten Massenströme eingestellt oder in Abhängigkeit von an hier nicht gezeigten Sensoren gemessenen Parametern, beispielsweise der Temperatur des Sauerstoffs in der Eintragseinrichtung 10 oder einer Stickoxid- oder Salpetersäurekonzentration in einer der gebleichten Säuren, geregelt werden. Die entsprechenden Regelungen erfolgen über eine hier nicht gezeigte Steuereinheit.

### Bezugszeichenliste

- 1: Vorrichtung
- 2: Reaktor
- 3a, 3b, 3c, 3d: Reaktorkammer
- 4a, 4b, 4c, 4d: Zuleitung
- 5a, 5b, 5c, 5d: Ausleitung
- 6a, 6b, 6c, 6d: Abgasleitung
- 7: Sammelleitung
- 8: Tropfenabscheider
- 9a, 9b, 9c, 9d: Wärmetauscher
- 10: Gaszuleitung
- 11: -
- 12: Tank
- 13: Verdampfer
- 14: Bypassleitung
- 15: Ventil
- 16: Ventil
- 17: -
- 18: Gaseintragseinrichtung
- 19a, 19b, 19c, 19d: Boden
- 20a, 20b, 20c, 20d: Eintragsabschnitt
- 21: Dichtmittel
- 22: Sprühdüse
- 23: Packung
- 24a, 24b, 24c, 24d: Flüssigkeitspegel

## Patentansprüche

1. Vorrichtung zum Eintragen von Gas in eine Mehrzahl von Prozessfluiden, mit einem Reaktor (2) und einer mit einer Gasversorgung strömungsverbundenen und in den Reaktor (2) einmündenden Gaszuleitung (10), und mit einer Eintragseinrichtung (18) zum Eintragen des Gases aus der Gaszuleitung (10) in ein im Reaktor (2) befindliches Prozessfluid,
**dadurch gekennzeichnet,**
**dass** der Reaktor (2) in mehrere strömungstechnisch voneinander getrennte, jeweils mit einer Zuleitung (4a, 4b, 4c, 4d) und einer Ableitung (5a, 5b, 5c, 5d) für jeweils ein Prozessfluid ausgerüstete Reaktorkammern (3a, 3b, 3c, 3d) unterteilt ist und die Eintragseinrichtung (18) eine Mehrzahl von jeweils einer Reaktorkammer (3a, 3b, 3c, 3d) zugeordneten und innerhalb der jeweiligen Reaktorkammer (3a, 3b, 3c, 3d) angeordneten Eintragsabschnitten (20a, 20b, 20c, 20d) umfasst, die aus einem gasdurchlässigen, jedoch flüssigkeitsundurchlässigen Material gefertigt sind.

2. Vorrichtung nach Anspruch 1, **dadurch gekennzeichnet, dass** die Zuführung (4a, 4b, 4c, 4d) für das Prozessfluid wenigstens einer Reaktorkammer (3a, 3b, 3c, 3d) mit einer Sprühdüse (22) ausgerüstet ist.

3. Vorrichtung nach einem der vorhergehenden Ansprüche, **dadurch gekennzeichnet, dass** wenigstens eine Reaktorkammer (3a, 3b, 3c, 3d) mit einer Packung (23), bevorzugt mit Raschig-Ringen, gefüllt ist.

4. Vorrichtung nach einem der vorhergehenden Ansprüche, dass der Reaktor (2) zylinderförmig, mit in Längsrichtung aufeinanderfolgenden strömungstechnisch voneinander getrennten Reaktorkammern (3a, 3b, 3c, 3d) ausgebildet ist, durch die sich die Eintragseinrichtung (18) zentral hindurcherstreckt.

5. Vorrichtung nach einem der vorhergehenden Ansprüche, **dadurch gekennzeichnet, dass** die Eintragseinrichtung (18) durch eine sich durch mehrere Reaktorkammern (3a, 3b, 3c, 3d) hindurch erstreckende Sintermetallkerze gebildet wird.

6. Vorrichtung nach einem der vorhergehenden Ansprüche, **dadurch gekennzeichnet, dass** die Gaszuleitung (10), stromauf zur Einmündung in den Reaktor (2), und/oder die Zuführungen für das Prozessfluid wenigstens einer der Reaktorkammern (3a, 3b, 3c, 3d) mit regelbaren Ventilen ausgerüstet ist/sind, die mit einer Steuereinheit datenverbunden sind.

7. Vorrichtung nach einem der vorhergehenden Ansprüche, **dadurch gekennzeichnet, dass** die Gaszuleitung (10) mit einer Quelle für flüssigen oder kalten gasförmigen Sauerstoff strömungsverbunden ist.

8. Vorrichtung nach einem der vorhergehenden Ansprüche, **dadurch gekennzeichnet, dass** die Zu- und Ableitungen (4a, 4b, 4c, 4d, 5a, 5b, 5c, 5d) der Reaktorkammern (3a, 3b, 3c, 3d) jeweils mit unterschiedlichen Anlagenteilen einer Anlage zur Produktion von Salpetersäure strömungsverbunden sind.

9. Verfahren zum Eintragen eines Gases in eine Mehrzahl von Prozessfluiden, bei dem ein Gas über eine mit einer Eintragseinrichtung (18) ausgerüstete Gaszuleitung (10) in ein in einem Reaktor (2) befindliches flüssiges Prozessfluid eingetragen wird, **dadurch gekennzeichnet,**
**dass** das Gas aus der Gaszuleitung (10) über aus einem gasdurchlässigen, jedoch flüssigkeitsundurchlässigen Material bestehende (20a, 20b, 20c, 20d) gleichzeitig in eine Mehrzahl von Prozessfluiden eingetragen wird, die jeweils strömungstechnisch voneinander getrennte Reaktorkammern (3a, 3b, 3c, 3d) des Reaktors (2) durchlaufen.

10. Verfahren nach Anspruch 9, **dadurch gekennzeichnet, dass** die Prozessfluide Zwischenprodukte aus einem mehrere Stufen durchlaufenden Verarbeitungsprozess zur Verarbeitung eines fluiden Prozessmediums sind, die jeweils den Reaktorkammern (3a, 3b, 3c, 3d) des Reaktors (2) zugeführt werden.

11. Verfahren nach Anspruch 9 oder 10, **dadurch gekennzeichnet, dass** die Temperatur des Gases bei der Einleitung in ein Prozessfluid oder mehrere Prozessfluide gleich oder niedriger ist als die Gefriertemperatur des jeweiligen Prozessfluids oder der Prozessfluide.

## Claims

1. Apparatus for transferring gas into a plurality of process fluids, with a reactor (2) and a gas supply line (10), which is flow-connected to a gas supply and enters the reactor (2), and with a transferring device (18) for transferring the gas from the gas supply line (10) into a process fluid located in the reactor (2), **characterized**
**in that** the reactor (2) is divided into a number of reactor chambers (3a, 3b, 3c, 3d), which are separate from one another in terms of flow, are respectively equipped with a supply line (4a, 4b, 4c, 4d) and a discharge line (5a, 5b, 5c, 5d) for a process fluid in each case, and the transferring device (18) comprises a plurality of transferring portions (20a, 20b, 20c, 20d), which are respectively assigned to a reactor chamber (3a, 3b, 3c, 3d), are arranged within the respective reactor chamber (3a, 3b, 3c, 3d) and are produced from a gas-permeable, but liquid-impermeable material.

2. Apparatus according to Claim 1, **characterized in that** the feed (4a, 4b, 4c, 4d) for the process fluid of at least one reactor chamber (3a, 3b, 3c, 3d) is equipped with a spray nozzle (22).

3. Apparatus according to one of the preceding claims, **characterized in that** at least one reactor chamber (3a, 3b, 3c, 3d) is filled with a packing (23), preferably with Raschig rings.

4. Apparatus according to one of the preceding claims, **characterized in that** the reactor (2) is formed cylindrically, with reactor chambers (3a, 3b, 3c, 3d) following one another in the longitudinal direction and separate from one another in terms of flow, through which the transferring device (18) extends centrally.

5. Apparatus according to one of the preceding claims, **characterized in that** the transferring device (18) is formed by a sintered metal cartridge extending through a number of reactor chambers (3a, 3b, 3c, 3d).

6. Apparatus according to one of the preceding claims, **characterized in that** the gas supply line (10), upstream of where it enters the reactor (2) and/or the feeds for the process fluid of at least one of the reactor chambers (3a, 3b, 3c, 3d) is/are equipped with controllable valves, which are data-linked to a control unit.

7. Apparatus according to one of the preceding claims, **characterized in that** the gas supply line (10) is flow-connected to a source for liquid or cold gaseous oxygen.

8. Apparatus according to one of the preceding claims, **characterized in that** the supply and discharge lines (4a, 4b, 4c, 4d, 5a, 5b, 5c, 5d) of the reactor chambers (3a, 3b, 3c, 3d) are respectively flow-connected to different plant parts of a plant for the production of nitric acid.

9. Process for transferring a gas into a plurality of process fluids, in which a gas is transferred by way of a gas supply line (10) equipped with a transferring device (18) into a liquid process fluid contained in a reactor (2),
**characterized**
**in that** the gas is transferred from the gas supply line (10) by way of transferring portions (20a, 20b, 20c, 20d) consisting of a gas-permeable, but liquid-impermeable material simultaneously into a plurality of process fluids, which respectively run through reactor chambers (3a, 3b, 3c, 3d) of the reactor (2) that are separate from one another in terms of flow.

10. Process according to Claim 9, **characterized in that** the process fluids are intermediate products from a processing process passing through a number of stages for the processing of a fluidic process medium, which are respectively fed to the process chambers (3a, 3b, 3c, 3d) of the reactor (2).

11. Process according to Claim 9 or 10, **characterized in that** the temperature of the gas during the introduction into a process fluid or a number of process fluids is the same or lower than the freezing temperature of the respective process fluid or the process fluids.

## Revendications

1. Dispositif pour introduire du gaz dans une pluralité de fluides de processus, comprenant un réacteur (2) et une conduite d'alimentation en gaz (10) en liaison fluidique avec une source de gaz et débouchant dans le réacteur (2), et comprenant un dispositif d'introduction (18) pour introduire le gaz depuis la conduite d'alimentation en gaz (10) dans un fluide de processus se trouvant dans le réacteur (2),
**caractérisé en ce que**
le réacteur (2) est divisé en plusieurs chambres de réacteur (3a, 3b, 3c, 3d) séparées fluidiquement les unes des autres, munies à chaque fois d'une conduite d'alimentation (4a, 4b, 4c, 4d) et d'une conduite d'évacuation (5a, 5b, 5c, 5d) pour un fluide de processus respectif et le dispositif d'introduction (18) comprend une pluralité de portions d'introduction (20a, 20b, 20c, 20d) associées à chaque fois à une chambre de réacteur (3a, 3b, 3c, 3d) et disposées à l'intérieur de la chambre de réacteur respective (3a, 3b, 3c, 3d), lesquelles sont fabriquées à partir d'un matériau perméable aux gaz mais imperméable aux liquides.

2. Dispositif selon la revendication 1, **caractérisé en ce que** l'alimentation (4a, 4b, 4c, 4d) en fluide de processus d'au moins une chambre de réacteur (3a, 3b, 3c, 3d) est équipée d'une buse de pulvérisation (22).

3. Dispositif selon l'une quelconque des revendications précédentes, **caractérisé en ce qu'**au moins une chambre de réacteur (3a, 3b, 3c, 3d) est remplie avec une garniture (23), de préférence avec des anneaux de Raschig.

4. Dispositif selon l'une quelconque des revendications précédentes, **caractérisé en ce que** le réacteur (2) est réalisé sous forme cylindrique, avec des chambres de réacteur (3a, 3b, 3c, 3d) séparées fluidiquement les unes des autres, se suivant dans la direction longitudinale, à travers lesquelles le dispositif d'introduction (18) s'étend centralement.

5. Dispositif selon l'une quelconque des revendications précédentes, **caractérisé en ce que** le dispositif d'introduction (18) est formé par une bougie en métal fritté s'étendant à travers plusieurs chambres de réacteur (3a, 3b, 3c, 3d).

6. Dispositif selon l'une quelconque des revendications précédentes, **caractérisé en ce que** la conduite d'alimentation en gaz (10), en amont de l'embouchure dans le réacteur (2), et/ou les alimentations en fluide de processus d'au moins l'une des chambres de réacteur (3a, 3b, 3c, 3d), est/sont équipée(s) de soupapes réglables qui sont connectées par transfert de données à l'unité de commande.

7. Dispositif selon l'une quelconque des revendications précédentes, **caractérisé en ce que** la conduite d'alimentation en gaz (10) est connectée fluidiquement à une source d'oxygène froid gazeux ou liquide.

8. Dispositif selon l'une quelconque des revendications précédentes, **caractérisé en ce que** les conduites d'alimentation et d'évacuation (4a, 4b, 4c, 4d, 5a, 5b, 5c, 5d) des chambres de réacteur (3a, 3b, 3c, 3d) sont connectées fluidiquement à chaque fois à des parties d'installation différentes d'une installation de production d'acide nitrique.

9. Procédé d'introduction d'un gaz dans une pluralité de fluides de processus, dans lequel un gaz est introduit par le biais d'une conduite d'alimentation en gaz (10) munie d'un dispositif d'introduction (18) dans un fluide de processus liquide se trouvant dans un réacteur (2),
**caractérisé en ce que**
le gaz issu de la conduite d'alimentation en gaz (10), par le biais de portions d'introduction (20a, 20b, 20c, 20d) constituées d'un matériau perméable aux gaz mais imperméable aux liquides, est introduit simultanément dans une pluralité de fluides de processus qui traversent à chaque fois des chambres de réacteur (3a, 3b, 3c, 3d) du réacteur (2) séparées fluidiquement les unes des autres.

10. Procédé selon la revendication 9, **caractérisé en ce que** les fluides de processus sont des produits intermédiaires issus d'un processus de traitement passant par plusieurs étapes pour traiter un agent de processus fluide, lesquels sont à chaque fois acheminés aux chambres de réacteur (3a, 3b, 3c, 3d) du réacteur (2).

11. Procédé selon la revendication 9 ou 10, **caractérisé en ce que** la température du gaz lors de l'introduction dans un fluide de processus ou dans plusieurs fluides de processus est inférieure ou égale à la température de congélation du ou des fluides de processus respectifs.
